# EUROPÄISCHE PATENTSCHRIFT

(11) **EP 3 219 666 B1**
(45) Veröffentlichungstag und Bekanntmachung des Hinweises auf die Patenterteilung: **03.07.2019**
(21) Anmeldenummer: 16400005.1
(22) Anmeldetag: 16.03.2016
(51) Int. Cl.: C01B 3/38, C10G 70/02, C10G 70/04, C10G 67/06, C10G 45/32, C10G 45/02, C10G 45/00, C10G 25/00

(54) **VERFAHREN UND VORRICHTUNG ZUM HERSTELLEN EINES GEMISCHTEN FEEDSTROMS FÜR EINE DAMPFREFORMIERUNGSANLAGE**
METHOD AND DEVICE FOR CREATING A MIXED FEED FLOW FOR A STEAM REFORMING UNIT
PROCEDE ET DISPOSITIF DE FABRICATION D'UN DEBIT D'ALIMENTATION MELANGE POUR UNE INSTALLATION DE REFORMAGE A LA VAPEUR

(43) Veröffentlichungstag der Anmeldung: 20.09.2017
(73) Patentinhaber: L'Air Liquide Société Anonyme pour l'Etude et l'Exploitation des Procédés Georges Claude, 75007 Paris (FR)
(72) Erfinder: Ott, Jörg, 60389 Frankfurt (DE); Lehmann, Maik, 60385 Frankfurt (DE); Szieleit, Christian, 61231 Bad Nauheim (DE); Nieding, Sebastian, 60322 Frankfurt (DE)
(74) Vertreter: Dropsch, Holger

(56) Entgegenhaltungen:
- WO-A2-2011/016981
- US-A1- 2011 034 745
- US-B1- 7 037 485

## Beschreibung

### Gebiet der Erfindung

Die vorliegende Erfindung betrifft ein Verfahren zum Herstellen eines gemischten Feedstroms für eine Dampfreformierungsanlage, die mindestens eine Reformierungsstufe enthält. Der gemischte Feedstrom umfasst dabei einen ersten, Methan enthaltenden Einsatzstrom und einen zweiten, höhere Kohlenwasserstoffe, Olefine und Diolefine umfassenden Einsatzstrom, wobei der erste und/oder der zweite Einsatzstrom auch organische Schwefelverbindungen enthält. Als erster Einsatzstrom kommt dabei Erdgas und als zweiter Einsatzstrom beispielsweise ein Raffinerieabgas in Betracht. Der zweite Einsatzstrom kann dabei auch Methan, Wasserstoff sowie Metalle und Chloride enthalten.

Ferner betrifft die Erfindung auch eine Vorrichtung zur Durchführung eines solchen Verfahrens.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Uilmann's Encyclopedia of industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Reformerrohre werden zumeist mittels Brennern befeuert, die an der Oberseite oder Unterseite oder an den Seitenwänden im Innenraum des Reformerofens angebracht sind und direkt den Zwischenraum zwischen den Reformerrohren befeuern.

Nach Vorerhitzung durch Wärmetauscher oder befeuerte Heizer tritt das Kohlenwasserstoff-Dampf-Gemisch nach Enderhitzung in die Reformerrohre ein und wird dort am Reformierungskatalysator zu Kohlenmonoxid und Wasserstoff umgesetzt. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf.

Zur Energieoptimierung und/oder bei Einsatzstoffen mit höheren Kohlenwasserstoffen kann nach dem Vorerhitzer ein sogenannter Prereformer (Vorreformer) zur Vorspaltung des Einsatzstoffes eingesetzt werden. Der vorgespaltene Einsatzstoff wird dann in einem weiteren Erhitzer auf die gewünschte Eintrittstemperatur in den Hauptreformer, beispielsweise den Steamreformer, erhitzt. Die konventionelle Vorreformierung kann als Dampfreformierungsprozess bei begrenzten Temperaturen definiert werden (deutlich unter 700 °C). Sie führt zu einem gasförmigen Zwischenprodukt, dessen Hauptbestandteile Methan und Dampf sind. Das Zwischenprodukt enthält keine oder nur noch geringfügige Anteile höherer Kohlenwasserstoffe. Normalerweise wird dieses Zwischenprodukt in einem als Hauptreformer bezeichneten Steamreformer weiterbehandelt.

Wie in Ullmann's Encyclopedia of Industrial Chemistry, ibid., ausgeführt wird, werden für die Dampfreformierung normalerweise Katalysatoren auf mit Nickelbasis eingesetzt.

Diese sind empfindlich gegenüber Katalysatorgiften wie Schwefel, Arsen, Kupfer, Vanadium, Blei und Chlor oder Halogene im Allgemeinen. Insbesondere Schwefel erniedrigt die Katalysatoraktivität deutlich und kann in praktisch allen Einsatzstoffen gefunden werden, die als Feed für die Dampfreformierung in Frage kommen. Frühere Entschwefelungssysteme wurden mit imprägnierter Aktivkohle als Adsorbens und bei Umgebungstemperatur betrieben. Jedoch unterscheidet sich die Effizienz dieser Adsorptionsmethode in Abhängigkeit von den spezifischen Schwefelverbindungen in dem Feedgasstrom. Aus diesem Grund werden heute Entschwefelungssysteme bevorzugt, bei denen die Entfernung von Schwefelverbindungen an Zinkoxid als Sorptionsmittel bei Temperaturen von 350 bis 400 ° C erfolgt. Diese Zinkoxid-basierten Entschwefelungssysteme sind sehr zuverlässig bei der Absorption von Schwefelwasserstoff und, mit Einschränkungen, Schwefelverbindungen wie Carbonylsulfid und Mercaptanen. Die Entfernung cyclischer organischer Schwefelverbindungen, wie z. B. von Thiophenen, erfordert dagegen normalerweise eine Hydrierung an Kobalt-Molybdän- oder Nickel-Molybdän-Katalysatoren mit Wasserstoff oder einem Wasserstoff enthaltenden Gas bei Temperaturen von typischerweise 350 bis 380 ° C. Man spricht hierbei auch von hydrierender Entschwefelung oder Hydrodesulfurierung (HDS). Die cyclischen Schwefelverbindungen werden dabei zu Schwefelwasserstoff hydriert, der dann in einem nachgeschalteten Zinkoxid-Festbett gebunden wird. Diese Hydrierung kann gleichzeitig verwendet werden, um ungesättigte Kohlenwasserstoffe, beispielsweise Olefine oder Diolefine, im Feedgas zu hydrieren. Weil der Temperaturbereich für diese Hydrierung üblicherweise auf 250 bis 400 °C begrenzt ist, muss der Gehalt an ungesättigten Verbindungen im Feedgas begrenzt werden, da deren Hydrierung stark exotherm verläuft.

Für die Dampfreformierung ist zwar die Verwendung von methanhaltigem Erdgas als Einsatzstoff oder sog. Feed dominierend; es werden, je nach lokaler Verfügbarkeit, aber auch andere Kohlenwasserstoffe, wie beispielweise Naphtha, Flüssiggas oder Raffineriegase eingesetzt. So beschreibt die US-Patentschrift US 3477832 ein Verfahren zur Herstellung eines Synthesegases durch katalytische Dampfreformierung von Naphtha und ähnlichen Kohlenwasserstoffen. Als Naphtha im Sinne dieser Anmeldung werden dabei Kohlenwasserstoffe mit einer mittleren Kohlenstoffzahl von sieben verstanden, die gerade und verzweigte Kohlenwasserstoffe, einen gewissen Anteil aromatischer und olefinischer Kohlenwasserstoffe und verschiedene Verunreinigungen, beispielsweise Schwefelkomponenten, enthalten. Um dieses bei Umgebungsbedingungen flüssige Stoffgemisch in einen Feedstrom für die Dampfreformierung zu überführen, wird es verdampft und aufgeheizt, wobei die Temperatur idealerweise zwischen 260 und 316 °C liegen sollte, aber keinesfalls 343 °C überschreiten darf, da es ansonsten zu einem Zerfall von im Feed enthaltenen Komponenten unter Bildung unerwünschter Kohlenstoffablagerungen in der Dampfreformierungsanlage und in ihr vorgeschalteten Anlagenkomponenten kommt.

Die internationale Patentanmeldung WO 2011/016981 A2 offenbart ein Verfahren zur Herstellung eines gemischten Feedstroms für eine Dampfreformierungsanlage, wobei Raffineriegase, beispielsweise FCC-Abgas oder Cokerabgas als Ausgangsbasis dienen, denen ein Erdgasstrom zugemischt wird. Beide Raffineriegase enthalten neben Olefinen auch Diolefine wie 1,3-Butadien. Es wird gelehrt, dass der Olefingehalt und der Gehalt derartiger Ströme an organischen Schwefelverbindungen eine Vorbehandlung erfordert, um die Abscheidung von Kohlenstoff auf dem Reformierkatalysator bzw. die Vergiftung des Katalysators mit Schwefelverbindungen zu vermeiden, die sonst zu einer Desaktivierung eines solchen Katalysators führen könnten.

Auch die US-Patentschrift US 7037485 B1 lehrt die Bildung eines gemischten Feeds für die Dampfreformierung aus einem Erdgasstrom und einem Raffineriegasstrom. Die beiden Einsatzströme werden dabei zunächst zusammengeführt und vermischt und nachfolgend im indirekten Wärmetausch gegen den heißen Produktstrom aus der der Dampfreformierungsanlage nachgeschalteten CO-Konvertierungsanlage aufgeheizt. Anschließend wird der aufgeheizte Mischstrom in einem Reaktor behandelt, der einen Katalysator enthält, der sowohl für die Hydrierung der Olefine und der Schwefelverbindungen, als auch für die partielle autotherme Reformierung (ATR) aktiv ist. Dem Reaktor wird zusätzlich Dampf als Temperaturmoderator sowie optional Sauerstoff zugegeben, wenn der Reaktor im partiellen ATR-Modus betrieben werden soll, wobei bereits eine Vorreformierung der höheren Kohlenwasserstoffe zu Methan und Synthesegasbestandteilen erfolgt. Nachteilig ist dabei die für die Zuführung von Dampf und Sauerstoff benötigte Logistik. Eine zu hohe Dampfzugabe kann zudem die Temperatur im Reaktor zu stark absenken und so Vorreformierung negativ beeinflussen. Ferner wird dann auch die nachgeschaltete Schwefelabscheidung beeinträchtigt,

Die US 7037485 B1 lehrt ferner zwei Ausführungsformen des Verfahrens, in denen der Erdgasstrom und der Raffineriegasstrom vollständig getrennt vorbehandelt werden und erst vor der Einführung in die Dampfreformierung zusammengeführt werden. Sehr nachteilig ist es dabei, dass demnach alle Vorbehandlungseinrichtungen doppelt vorhanden sein müssen.

### Beschreibung der Erfindung

Es ist daher die Aufgabe der vorliegenden Erfindung, ein Verfahren und eine Vorrichtung zum Herstellen eines gemischten Feedstroms für eine Dampfreformierungsanlage anzugeben, das ohne die beschriebenen Nachteile des Standes der Technik auskommt.

Diese Aufgabe wird durch ein Verfahren mit den Merkmalen des Anspruchs 1 und durch eine Vorrichtung mit den Merkmalen des Anspruchs 10 gelöst. Weitere Ausgestaltungen der Erfindung ergeben sich aus den jeweiligen Unteransprüchen.

### Erfindungsgemäßes Verfahren:

Verfahren zum Herstellen eines gemischten Feedstroms für eine mindestens eine Reformierungsstufe enthaltende Dampfreformierungsanlage, umfassend einen ersten, Methan enthaltenden Einsatzstrom und einen zweiten, höhere Kohlenwasserstoffe, Olefine und Diolefine umfassenden Einsatzstrom, wobei der erste und/oder der zweite Einsatzstrom auch Schwefelverbindungen enthält und wobei das Verfahren folgende Schritte umfasst;
(a) Bereitstellen des ersten Einsatzstroms und des zweiten Einsatzstroms,
(b) Aufheizen des ersten Einsatzstroms in einer ersten Heizvorrichtung,
(c) Zusammenführen und Vermischen mindestens eines Teils des ersten Einsatzstroms mit dem zweiten Einsatzstrom, Einleiten dieser Mischung in eine erste Hydrierungszone, mindestens teilweises Umsetzen der Diolefine in der ersten Hydrierungszone unter Diolefin-Hydrierungsbedingungen, Ausleiten eines Diolefin-Hydrierungsproduktstroms aus der ersten Hydrierungszone,
(d) Einleiten des Diolefin-Hydrierungsproduktstroms in eine zweite Hydrierungszone, mindestens teilweises Umsetzen der Olefine in der zweiten Hydrierungszone unter Olefin-Hydrierungsbedingungen. Ausleiten eines Olefin-Hydrierungsproduktstroms aus der zweiten Hydrierungszone,
(e) Einleiten des Olefin-Hydrierungsproduktstroms in eine dritte Hydrierungszone, mindestens teilweises Umsetzen der Schwefelverbindungen in der dritten Hydrierungszone unter Bedingungen der Hydrodesulfurierung (HDS) zu entschwefelten Kohlenwasserstoffen und Schwefelwasserstoff, Ausleiten eines HDS-Produktstroms aus der dritten Hydrierungszone,
(f) Einleiten des HDS-Produktstroms in mindestens eine Adsorptionszone, gefüllt mit einem für Schwefelwasserstoff selektiven Adsorbens, mindestens teilweise Abscheidung des Schwefelwasserstoffs durch Adsorption an dem Adsorbens, Ausleiten eines an Schwefelwasserstoff abgereicherten Adsorberproduktstroms aus der Adsorptionszone,
(g) Einleiten des Adsorberproduktstroms als gemischter Feedstrom in mindestens eine Reformierungstufe, dadurch gekennzeichnet, dass der erste Einsatzstrom nach dem Aufheizen in der ersten Heizvorrichtung in einen ersten Hydrierungsteilstrom und einen zweiten Hydrierungsteilstrom aufgeteilt wird, der erste Hydrierungsteilstrom in eine Kühlvorrichtung eingeleitet wird, aus der Kühlvorrichtung ein gekühlter erster Hydrierungsteilstrom ausgeleitet wird, der gekühlte erste Hydrierungsteilstrom mit dem zweiten Einsatzstrom zusammengeführt und vermischt wird, und die somit erhaltene Mischung in die erste Hydrierungszone eingeleitet wird.

### Erfindungsgemäße Vorrichtung:

Vorrichtung zum Herstellen eines gemischten Feedstroms für eine mindestens eine Reformierungsstufe enthaltende Dampfreformierungsanlage, umfassend einen ersten, Methan enthaltenden Einsatzstrom und einen zweiten, höhere Kohlenwasserstoffe, Olefine und Diolefine umfassenden Einsatzstrom, wobei der erste und/oder der zweite Einsatzstrom auch Schwefelverbindungen enthält und wobei die Vorrichtung folgende, in Fluidverbindung miteinander stehende Bestandteile umfasst:
(a) Mittel zum Bereitstellen des ersten Einsatzstroms und des zweiten Einsatzstroms,
(b) eine erste Heizvorrichtung zum Aufheizen des ersten Einsatzstroms,
(c) Mittel zum Zusammenführen und Vermischen mindestens eines Teils des ersten Einsatzstroms mit dem zweiten Einsatzstrom, eine erste Hydrierungszone, Mittel zum Einleiten dieser Mischung in die erste Hydrierungszone, Mittel zum Ausleiten eines Diolefin-Hydrierungsproduktstroms aus der ersten Hydrierungszone,
(d) eine zweite Hydrierungszone, Mittel zum Einleiten des Diolefin-Hydrierungsproduktstroms in die zweite Hydrierungszone, Mittel zum Ausleiten eines Olefin-Hydrierungsproduktstroms aus der zweiten Hydrierungszone,
(e) eine dritte Hydrierungszone (HDS), Mittel zum Einleiten des Olefin-Hydrierungsproduktstroms in die dritte Hydrierungszone, Mittel zum Ausleiten eines HDS-Produktstroms aus der dritten Hydrierungszone,
(f) eine Adsorptionszone, gefüllt mit einem für Schwefelwasserstoff selektiven Adsorbens, Mittel zum Einleiten des HDS-Produktstroms in die mindestens eine Adsorptionszone, Mittel zum Ausleiten eines an Schwefelwasserstoff abgereicherten Adsorberproduktstroms aus der Adsorptionszone,
(g) mindestens eine Reformierungsstufe, Mittel zum Einleiten des Adsorberproduktstroms als gemischter Feedstrom in die mindestens eine Reformierungsstufe, dadurch gekennzeichnet, dass die Vorrichtung ferner umfasst: eine Auftrennvorrichtung zum Aufteilen des ersten Einsatzstroms nach dem Aufheizen in der ersten Heizvorrichtung in einen ersten Hydrierungsteilstrom und einen zweiten Hydrierungsteilstrom, eine Kühlvorrichtung und Mittel zum Einleiten des ersten Hydrierungsteilstroms in die Kühlvorrichtung, Mittel zum Ausleiten eines gekühlten ersten Hydrierungsteilstroms aus der Kühlvorrichtung, Mittel zum Zusammenführen und Vermischen des gekühlten ersten Hydrierungsteilstroms mit dem zweiten Einsatzstrom, und Mittel zum Einleiten der somit erhaltenen Mischung in die erste Hydrierungszone.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile.

Als höhere Kohlenwasserstoffe werden im Sinne der Erfindung alle Kohlenwasserstoffe mit mehr als einem C-Atom im Molekül verstanden.

Die für das Umsetzen der Diolefine in der ersten Hydrierungszone, für das Umsetzen der Olefine in der zweiten Hydrierungszone sowie für das Umsetzen der Schwefelverbindungen in der dritten Hydrierungszone erforderlichen Umsetzungsbedingungen sind dem Fachmann aus dem Stand der Technik, beispielsweise den eingangs erörterten Druckschriften, bekannt. Notwendige Anpassungen dieser Bedingungen an die jeweiligen Betriebserfordernisse wird er auf der Grundlage von Routineversuchen vornehmen.

Erfindungsgemäß wird die erforderliche Hydrierung der Mono- und Diolefine und die Hydrodesutfurierung der im Feedstrom enthaltenen organischen Schwefelverbindungen stufenweise unter jeweils optimierten Verfahrensbedingungen durchgeführt. Ferner wird die Eintrittstemperatur in die jeweilige Reaktionszone so gesteuert, dass eine Überhitzung der Einsatzstoffe vermieden wird, die ansonsten zu unerwünschten Koksablagerungen, Verstopfungen sowie zur beschleunigten Desaktivierung der verwendeten Katalysatoren führt.

Da Katalysatoren existieren, die die Hydrierung von Olefinen und die Hydrodesulfurierung organischer Schwefelverbindungen unter ähnlichen oder gleichen Verfahrensbedingungen ermöglichen, ist die Erfindung im Falle der Verwendung solcher Katalysatoren so zu verstehen, dass die zweite und die dritte Hydrierungszone zusammenfallen.

Der zweite Einsatzstrom kann dabei auch Methan, Wasserstoff sowie Metalle und Chloride enthalten. Dies ist häufig dann der Fall, wenn als zweiter Einsatzstrom ein Raffinerieabgas verwendet wird.

Bei der Durchführung des erfindungsgemäßen Verfahrens erfolgt eine Wasserstoffzugabe zu einem oder beiden der Einsatzströme, falls nicht bereits ausreichend Wasserstoff in einem der Einsatzströme vorhanden ist. Dazu erfolgt eine Messung des Wasserstoffgehalts durch Probenahme und Analyse der Einsatzströme, ggf. online; sodann erfolgt im Bedarfsfalle eine Ergänzung des stöchiometrischen Bedarfs an Wasserstoff für die Hydrierungsschritte durch Rückführung eines Wasserstoff-Recyclestroms aus dem Wasserstoff-Produktstrom der Dampfreformierungsanlage. Bei der erfindungsgemäßen Vorrichtung sind daher entsprechend Messstellen bzw. Probenahmestellen sowie eine Rückführleitung für die Rückführung von Wasserstoff aus dem Dampfreformierungsprodukt vorzusehen.

### Bevorzugte Ausgestaltungen der Erfindung

In einer bevorzugten Ausgestaltung des erfindungsgemäßen Verfahrens erfolgt das Zusammenführen und Vermischen mindestens eines Teils des ersten Einsatzstroms mit dem zweiten Einsatzstrom in der Weise, dass die Mischung bei Eintritt in die erste Hydrierungszone eine Temperatur von kleiner als 300 °C, bevorzugt kleiner als 250 °C, meist bevorzugt kleiner als 230 °C aufweist. Auf diese Weise werden unerwünschte Crack- und Polymerisationsreaktionen der in der Mischung enthaltenen Olefine, insbesondere der Diolefine, sicher vermieden. Bei diesen unerwünschten Reaktionen bildet sich Koks, der sich innerhalb der Rohrleitungen und Apparate ablagert und diese mechanisch blockiert, so dass der Druckverlust ansteigt bzw. die Wärmetauscheffizienz von Wärmetauschern beeinträchtigt wird. Die Abscheidung von Koks auf bzw. in den verwendeten Katalysator-Festbetten führt zur ihrer Desaktivierung. Zur Entfernung der Koksablagerungen ist die Stillsetzung der Dampfreformierungsanlage erforderlich, wodurch es zu Stillstandszeiten und Produktionsausfällen kommt.

Das erfindungsgemäße Verfahren ist dadurch gekennzeichnet, dass
- der erste Einsatzstrom nach dem Aufheizen in der ersten Heizvorrichtung in einen ersten Hydrierungsteilstrom und einen zweiten Hydrierungsteilstrom aufgeteilt wird,
- der erste Hydrierungsteilstrom in eine Kühlvorrichtung eingeleitet wird,
- aus der Kühlvorrichtung ein gekühlter erster Hydrierungsteilstrom ausgeleitet wird,
- der gekühlte erste Hydrierungsteilstrom mit dem zweiten Einsatzstrom zusammengeführt und vermischt wird,
- die somit erhaltene Mischung in die erste Hydrierungszone eingeleitet wird.

Von großem Vorteil ist es dabei, dass der zweite Einsatzstrom, der die Olefine und Diolefine enthält, dem gekühlten ersten Hydrierungsteilstrom zugegeben wird und somit an einer relativ kalten Stelle in das Verfahren eingeführt wird. Auch diese Maßnahme ist sehr hilfreich zur Vermeidung unerwünschter Crack- und Polymerisationsreaktionen der in der Mischung enthaltenen Olefine und Diolefine. Von besonderem Vorteil ist es dabei, dass der zweite Einsatzstrom, der die Olefine und Diolefine enthält, vor der Umsetzung der Diolefine in der ersten Hydrierungszone nicht mehr mit Wärmeaustauschflächen von Wärmetauschern in Berührung kommt. Da diese aufgrund von Wärmeübergangslimitierungen stets heißer sein müssen als die gewünschte Austrittstemperatur des Fluidstroms aus dem Wärmetauscher, kommt es an solchen Wärmeaustauschflächen verstärkt zum Zerfall ungesättigter Kohlenwasserstoffe zu Koks.

In Weiterbildung der zuvor erörterten Ausgestaltung des erfindungsgemäßen Verfahrens wird der Diolefin-Hydrierungsproduktstrom mit dem zweiten Hydrierungsteilstrom zusammengeführt und vermischt und die somit erhaltene Mischung in die zweite Hydrierungszone eingeleitet. Auf diese Weise werden sämtliche Olefine der Hydrierung in der zweiten Hydrierungszone zugeführt. Dadurch, dass die Diolefine im zweiten Einsatzstrom zuvor in der ersten Hydrierungszone vorhydriert wurden, können die Reaktionsbedingungen in der zweiten Hydrierungszone hinsichtlich der Hydrierung der Monoolefine optimiert werden. Ferner wird die Exothermie in der zweiten Hydrierungszone reduziert.

In weiterer Weiterbildung der beiden zuvor erörterten Ausgestaltungen des erfindungsgemäßen Verfahrens wird als Kühlvorrichtung ein Luftkühler oder ein Wärmetauscher verwendet, wobei bei Verwendung eines Wärmetauschers die Kühlung bevorzugt im indirekten Wärmetausch gegen mindestens einen Teil des ersten Einsatzstromes vor der ersten Heizvorrichtung erfolgt. Beide Kühlvorrichtungen ermöglichen eine ausreichende Abkühlung des ersten Hydrierungsteilstroms vor der Zugabe des zweiten Einsatzstroms. Bei Verwendung eines Wärmetauschers wird die Enthalpie des ersten Hydrierungsteilstroms zudem für das Aufheizen eines anderen Fluidstroms, bevorzugt des kalten, ersten Einsatzstromes, genutzt.

Besonders bevorzugt wird es bei den zuvor erörterten Ausgestaltungen des erfindungsgemäßen Verfahrens, wenn die Kühlleistung der. Kühlvorrichtung und/oder das Mengenverhältnis des ersten Hydrierungsteilstroms zum zweiten Hydrierungsteilstrom so gewählt wird, dass die Mischung bei Eintritt in die erste Hydrierungszone eine Temperatur von kleiner als 300 °C, bevorzugt kleiner als 250 °C, meist bevorzugt kleiner als 230 °C aufweist. Die gewünschte Eintrittstemperatur der Mischung in die erste Hydrierungszone kann demnach eingestellt werden, indem entweder die Kühlleistung der Kühlvorrichtung gesteuert oder alternativ das Mengenverhältnis des ersten Hydrierungsteilstroms zum zweiten Hydrierungsteilstrom durch entsprechende Mengen- bzw. Durchflussregelungen variiert wird. Auch eine Kombination beider Maßnahmen ist möglich. Hieraus ergeben sich zusätzliche Freiheitsgrade und eine große Flexibilität bei der Einstellung der gewünschten Eintrittstemperatur in die erste Hydrierungszone.

In besonderer Ausgestaltung des erfindungsgemäßen Verfahrens wird der zweite Einsatzstrom vor dem Zusammenführen und Vermischen mit mindestens einem Teils des ersten Einsatzstroms in eine Adsorptionszone eingeleitet, die mit einem für Metalle selektiven Adsorbens gefüllt ist. Erdölbasierte Einsatzströme wie beispielsweise Raffinerieabgase können signifikante Mengen an Metallen enthalten, die als Katalysatorgifte in nachgeschalteten Verfahrensstufen wirken können und daher zuvor entfernt werden müssen.

In einem weiteren Aspekt des erfindungsgemäßen Verfahrens ist die erste Heizvorrichtung als Wärmetauscher ausgestaltet, wobei der erste Einsatzstrom im indirekten Wärmetausch gegen einen heißen Rohsynthesegas-Produktstrom aus der Dampfreformierungsanlage, gegen einen heißen Rauchgasstrom aus dem Reformerofen oder gegen einen heißen Produktgasstrom aus der der Dampfreformierungsanlage nachgeschalteten CO-Konvertierungsanlage(CO-Shift) aufgeheizt wird. Durch diese Maßnahme wird der Wärmeinhalt der genannten Prozessströme zum Aufheizen des ersten Einsatzstroms genutzt und somit die Energieeffizienz des Gesamtverfahrens verbessert.

In Weiterbildung des erfindungsgemäßen Verfahrens umfasst die Dampfreformierungsanlage eine Vorreformierungsstufe (Prereformer), in der höhere Kohlenwasserstoffe unter Vorreformierungsbedingungen mindestens teilweise zu Methan umgesetzt werden. Diese Weiterbildung wirkt besonders vorteilhaft mit dem erfindungsgemäßen Verfahren zum Herstellen eines gemischten Feedstroms zusammen, da die im gemischten Feedstrom enthaltenen Mono- und Diolefine zu den entsprechenden Alkanen hydriert werden, die dann in der Vorreformierungsstufe gezielt zu Methan vorumgesetzt werden können, bevor der gemischte Feedstrom in die Hauptreformierungsstufe gelangt.

In besonderer Ausgestaltung der erfindungsgemäßen Vorrichtung umfasst diese ferner Mittel, die es ermöglichen, das Zusammenführen und Vermischen mindestens eines Teils des ersten Einsatzstroms mit dem zweiten Einsatzstrom so durchzuführen, dass die Mischung bei Eintritt in die erste Hydrierungszone eine Temperatur von kleiner als 300 °C, bevorzugt kleiner als 250 °C, meist bevorzugt kleiner als 230 °C aufweist. Solche Mittel umfassen insbesondere Temperaturmess- und Temperaturregeleinrichtungen. Auf diese Weise werden unerwünschte Crack- und Polymerisationsreaktionen der in der Mischung enthaltenen Olefine, insbesondere der Diolefine, sicher vermieden. Bei diesen unerwünschten Reaktionen bildet sich Koks, der sich innerhalb der Rohrleitungen und Apparate ablagert und diese mechanisch blockiert, so dass der Druckverlust ansteigt bzw. die Wärmetauscheffizienz von Wärmetauschern beeinträchtigt wird. Die Abscheidung von Koks auf bzw. in den verwendeten Katalysator-Festbetten führt zur ihrer Desaktivierung. Zur Entfernung der Koksablagerungen ist die Stillsetzung der Dampfreformierungsanlage erforderlich, wodurch es zu Stillstandszeiten und Produktionsausfällen kommt.

Die erfindungsgemäße Vorrichtung ist dadurch gekennzeichnet, dass diese ferner umfasst:
- eine Auftrennvorrichtung zum Aufteilen des ersten Einsatzstroms nach dem Aufheizen in der ersten Heizvorrichtung in einen ersten Hydrierungsteilstrom und einen zweiten Hydrierungsteilstrom ,
- eine Kühlvorrichtung und Mittel zum Einleiten des ersten Hydrierungsteilstroms in die Kühlvorrichtung,
- Mittel zum Ausleiten eines gekühlten ersten Hydrierungsteilstroms aus der Kühlvorrichtung,
- Mittel zum Zusammenführen und Vermischen des gekühlten ersten Hydrierungsteilstroms mit dem zweiten Einsatzstrom,
- Mittel zum Einleiten der somit erhaltenen Mischung in die erste Hydrierungszone.

Von großem Vorteil ist es dabei, dass durch diese Ausgestaltung der Vorrichtung der zweite Einsatzstrom, der die Olefine und Diolefine enthält, dem gekühlten ersten Hydrierungsteilstrom zugegeben wird und somit an einer relativ kalten Stelle in das Verfahren eingeführt wird. Auch diese Maßnahme ist sehr hilfreich zur Vermeidung unerwünschter Crack- und Polymerisationsreaktionen der in der Mischung enthaltenen Olefine und Diolefine. Von besonderem Vorteil ist es dabei, dass der zweite Einsatzstrom, der die Olefine und Diolefine enthält, vor der Umsetzung der Diolefine in der ersten Hydrierungszone nicht mehr mit Wärmeaustauschflächen von Wärmetauschern in Berührung kommt. Da diese aufgrund von Wärmeübergangslimitierungen stets heißer sein müssen als die gewünschte Austrittstemperatur des Fluidstroms aus dem Wärmetauscher, kommt es an solchen Wärmeaustauschflächen verstärkt zum Zerfall ungesättigter Kohlenwasserstoffe zu Koks.

In Weiterbildung der zuvor erörterten Ausgestaltung der erfindungsgemäßen Vorrichtung umfasst diese ferner Mittel zum Zusammenführen und Vermischen des Diolefin-Hydrierungsproduktstroms mit dem zweiten Hydrierungsteilstrom und zum Einleiten der erhaltenen Mischung in die zweite Hydrierungszone. Auf diese Weise werden sämtliche Olefine der Hydrierung in der zweiten Hydrierungszone zugeführt. Dadurch, dass die Diolefine im zweiten Einsatzstrom zuvor in der ersten Hydrierungszone vorhydriert wurden, können die Reaktionsbedingungen in der zweiten Hydrierungszone hinsichtlich der Hydrierung der Monoolefine optimiert werden. Ferner wird die Exothermie in der zweiten Hydrierungszone reduziert.

In weiterer Weiterbildung der beiden zuvor erörterten Ausgestaltungen der erfindungsgemäßen Vorrichtung wird als Kühlvorrichtung ein Luftkühler oder ein Wärmetauscher verwendet, wobei bei Verwendung eines Wärmetauschers die Kühlung bevorzugt im indirekten Wärmetausch gegen mindestens einen Teil des ersten Einsatzstromes vor der ersten Heizvorrichtung erfolgt. Beide Kühlvorrichtungen ermöglichen eine ausreichende Abkühlung des ersten Hydrierungsteilstroms vor der Zugabe des zweiten Einsatzstroms. Bei Verwendung eines Wärmetauschers wird die Enthalpie des ersten Hydrierungsteilstroms zudem für das Aufheizen eines anderen Fluidstroms, bevorzugt des kalten, ersten Einsatzstromes, genutzt.

Besonders bevorzugt wird es bei den zuvor erörterten Ausgestaltungen der erfindungsgemäßen Vorrichtung, wenn die Kühlleistung der Kühlvorrichtung so einstellbar ist und/oder dass das Mengenverhältnis des ersten Hydrierungsteilstroms zum zweiten Hydrierungsteilstrom mittels mindestens einer Durchflussregelungsvorrichtung so gewählt werden kann, dass die Mischung bei Eintritt in die erste Hydrierungszone eine Temperatur von kleiner als 300 °C, bevorzugt kleiner als 250 °C, meist bevorzugt kleiner als 230 °C aufweist. Die gewünschte Eintrittstemperatur der Mischung in die erste Hydrierungszone kann demnach eingestellt werden, indem entweder die Kühlleistung der Kühlvorrichtung gesteuert oder alternativ das Mengenverhältnis des ersten Hydrierungsteilstroms zum zweiten Hydrierungsteilstrom durch entsprechende Mengen- bzw. Durchflussregelungen variiert wird. Auch eine Kombination beider Maßnahmen ist möglich.

Hieraus ergeben sich zusätzliche Freiheitsgrade und eine große Flexibilität bei der Einstellung der gewünschten Eintrittstemperatur in die erste Hydrierungszone.

In besonderer Ausgestaltung der erfindungsgemäßen Vorrichtung umfasst diese ferner eine Adsorptionszone, die mit einem für Metalle selektiven Adsorbens gefüllt ist und die dem oder den Mitteln zum Zusammenführen und Vermischen des zweiten Einsatzstroms mit mindestens einem Teils des ersten Einsatzstroms vorgeschaltet ist. Erdölbasierte Einsatzströme wie beispielsweise Raffinerieabgase können signifikante Mengen an Metallen enthalten, die als Katalysatorgifte in nachgeschalteten Verfahrensstufen wirken können und daher zuvor entfernt werden müssen.

In einem weiteren Aspekt der erfindungsgemäßen Vorrichtung ist die erste Heizvorrichtung als Wärmetauscher ausgestaltet und geeignet, einen indirekten Wärmetausch zwischen dem ersten Einsatzstrom und einem heißen Rohsynthesegas-Produktstrom aus der Dampfreformierungsanlage, einem heißen Rauchgasstrom aus dem Reformerofen oder einem heißen Produktgasstrom aus der der Dampfreformierungsanlage nachgeschalteten CO-Konvertierungsanlage (CO-Shift) durchzuführen. Durch diese Ausgestaltung wird der Wärmeinhalt der genannten Prozessströme zum Aufheizen des ersten Einsatzstroms genutzt und somit die Energieeffizienz des Gesamtverfahrens verbessert.

In Weiterbildung der erfindungsgemäßen Vorrichtung umfasst die Dampfreformierungsanlage eine Vorreformierungsstufe (Prereformer), in der höhere Kohlenwasserstoffe unter Vorreformierungsbedingungen mindestens teilweise zu Methan umgesetzt werden. Diese Weiterbildung wirkt besonders vorteilhaft mit der erfindungsgemäßen Vorrichtung zum Herstellen eines gemischten Feedstroms zusammen, da die im gemischten Feedstrom enthaltenen Mono- und Diolefine zu den entsprechenden Alkanen hydriert werden, die dann in der Vorreformierungsstufe gezielt zu Methan vorumgesetzt werden können, bevor der gemischte Feedstrom in die Hauptreformierungsstufe gelangt.

### Ausführungs- und Zahlenbeispiele

Weitere Merkmale, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: ein Verfahren zum Herstellen eines Erdgas-Feedstroms und dessen nachfolgende Umsetzung in einer Dampfreformierungsanlage gemäß des Stands der Technik,
- Fig. 2: die schematische Darstellung eines nicht erfindungsgemäßen Verfahrens bzw. einer nicht erfindungsgemäßen Vorrichtung,

- Fig. 3: die schematische Darstellung des erfindungsgemäßen Verfahrens bzw. der erfindungsgemäßen Vorrichtung nach einer Ausgestattung,

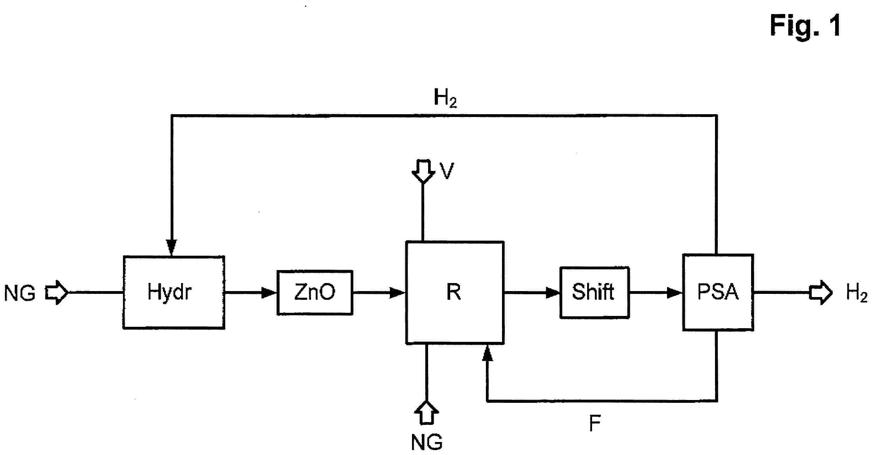

In Fig. 1 wird ein Verfahren zum Herstellen eines Erdgas-Feedstroms und dessen nachfolgende Umsetzung zu einem wasserstoffhaltigen Produktgas in einer Dampfreformierungsanlage gemäß des Stands der Technik schematisch als Blockfließbild dargestellt (Life Cycle Assessment of Hydrogen Production via Natural Gas Steam Reforming, Spath, P. L., Mann, M. K., National Renewable Energy Laboratory Technical Report, NREL/TP-570-27637, Februar 2001, Figur 1, Seite 4).

Ein kohlenwasserstoffhaltiger Feedstrom, beispielsweise Erdgas (NG), wird in eine Hydrierungsstufe (Hydr) geführt. In dieser erfolgt die Hydrierung ungesättigter Kohlenwasserstoffe, beispielsweise von Mono- und Diolefinen, zu den korrespondierenden Alkanen, sowie die Hydrodesutfurierung (HDS) schwefelhaltiger organischer Verbindungen, beispielsweise von Mercaptanen, zu schwefelreduzierten organischen Verbindungen und Schwefelwasserstoff (H₂S). Letzterer wird in der nachgeschalteten Sorptionsstufe an Zinkoxid (ZnO) ad- bzw. absorbiert und somit der Schwefelanteil aus dem Reformerfeed entfernt. Der Reformerfeed wird nachfolgend in die Dampfreformierungsstufe (R) eingeführt und in dieser mit ebenfalls herangeführtem Wasserdampf (V) zu einem Rohsynthesegas umgesetzt. Das Rohsynthesegas wird nachfolgend einer CO-Konvertierungsstufe (Shift) aufgegeben, in der im Rohsynthesegas enthaltenes Kohlenmonoxid (CO) mit zusätzlich herangeführtem Wasserdampf (bildlich nicht dargestellt) zu weiterem Wasserstoff umgesetzt wird. Der Produktstrom der CO-Konvertierungsstufe wird anschließend in eine Druckwechseladsorptionsanlage (PSA) geführt, in der er in einen Wasserstoff-Reinproduktstrom und einen Restgasstrom (F) aufgetrennt wird. Der Restgasstrom enthält noch brennbare Komponenten und wird zum Reformer zurückgeführt, wo er gemeinsam mit zusätzlich herangeführtem Erdgas zur Beheizung des Reformerofens dient. Ein Teil des Wasserstoff-Reinproduktstroms wird als Hydrierungsmittel zur Hydrierungsstufe zurückgeführt.

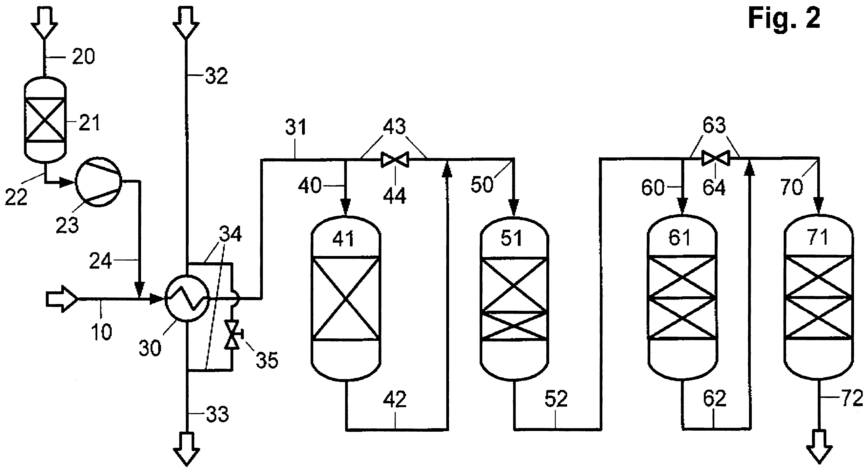

Fig. 2 zeigt schematisch ein nicht erfindungsgemäßes Verfahren bzw. eine nicht erfindungsgemäße Vorrichtung. Über Leitung 10 wird der erste Einsatzstrom, im vorliegenden Fall Erdgas, zum Wärmetauscher 30 geleitet. Über Leitung 20 wird ein zweiter Einsatzstrom, im vorliegenden Beispiel ein Raffinerieabgas, dem Adsorber 21 zugeführt, der mit einem für Metalle selektiven Adsorbens, beispielsweise mit Schwefel imprägnierte Aktivkohle, gefüllt ist und somit eine Entmetallisierung des zweiten Einsatzstroms bewirkt. Der Adsorber enthält ferner ein Adsorbens zur Abscheidung von Chloriden.

Der an Metallen abgereicherte zweite Einsatzstrom wird über Leitung 22 zum Verdichter 23 geführt, dort verdichtet und über Leitung 24 mit dem ersten Einsatzstrom in Leitung 10 zusammengeführt und vermischt. Der resultierende gemischte Feedstrom wird im Wärmetauscher 30 im indirekten Wärmetausch gegen den heißen Produktgasstrom aus der der Dampfreformierungsanlage nachgeschalteten CO-Konvertierungsanlage (CO-Shift) aufgeheizt, der über Leitung 32 zum Wärmetauscher 30 geführt wird.

Um den Temperaturanstieg beim Aufheizen des gemischten Feedstroms im Wärmetauscher 30 zu begrenzen, ist dieser mit einem Bypass, Leitung 34 und ein im Leitungsweg 34 angeordnetes Regelventil 35, ausgestattet. In derselben Weise kann der Exothermie der Hydrierung der ungesättigten Kohlenwasserstoffe Rechnung getragen werden und die Austrittstemperatur beispielsweise aus der zweiten Hydrierungszone konstant gehalten werden. In alternativer Ausgestaltung kann auch auf den Leitungsweg 34 und das darin angeordnete Regelventil 35 verzichtet und statt dessen eine Kühlvorrichtung in den Leitungsweg 31 integriert werden (bildlich nicht dargestellt). In weiterer alternativer Ausgestaltung kann anstelle des Bypass der Leitung 34, mit dem ein Teil des heißen Produktgasstrom aus der CO-Konvertierungsanlage um den Wärmetauscher 30 geführt wird, ein Bypass geschaltet werden, mit dem ein Teil des kalten ersten Einsatzstroms, hier Erdgas, um den Wärmetauscher 30 herumgeführt wird (bildlich nicht dargestellt). Auch Kombinationen dieser Ausgestaltungen sind möglich.

Über Leitung 31 wird der aufgeheizte, gemischte Feedstrom aus dem Wärmetauscher 30 abgeführt und über Leitung 40 dem Diolefin-Hydrierungsreaktor 41 aufgegeben (erste Hydrierungszone), der mit einem Festbett eines körnigen, festen Hydrierungskatalysators ausgestattet ist, der für die Hydrierung von Olefinen, insbesondere Diolefinen, aktiv und selektiv ist und gleichzeitig resistent gegenüber der Vergiftung durch organische Schwefelverbindungen ist. Entsprechende Katalysatoren hält der Handel bereit. Die Reaktionsbedingungen im Diolefin-Hydrierungsreaktor, insbesondere die Art des und die gewählte Eintrittstemperatur, werden dabei so gewählt, dass dort vor allem die im gemischten Feedstrom enthaltenen Diolefine, aber auch ein kleiner Teil der enthaltenen Monoolefine, zu den entsprechenden Monoolefinen bzw. Alkanen hydriert werden und die adiabate Temperaturerhöhung begrenzt wird. Über Leitung 42 wird der Diolefin-Hydrierungsproduktstrom aus dem Diolefin-Hydrierungsreaktor ausgeleitet.

Die von der Leitung 40 abzweigende Leitung 43, das im Leitungsweg 43 angeordnete Ventil 44 sowie weitere, nicht bildlich dargestellte Absperrvorrichtungen und Hilfsleitungen dienen im Wesentlichen der Schaltung eines Bypass um den Diolefin-Hydrierungsreaktor 41, falls an letzterem im laufenden Betrieb Revisionsarbeiten, beispielsweise ein Austausch des enthaltenen Hydrierungskatalysators, durchgeführt werden müssen. Im Normalbetrieb bleibt Ventil 44 geschlossen.

Der über Leitung 42 aus dem Diolefin-Hydrierungsreaktor ausgeleitete, an Diolefinen abgereicherte Diolefin-Hydrierungsproduktstrom wird über Leitung 50 dem Hydrierungsreaktor 51 aufgegeben (zweite Hydrierungszone). Dieser ist im vorliegenden Beispiel mit einem oberen und einem unteren Katalysatorfestbett ausgestattet. Das obere Katalysatorfestbett, das die zweite Hydrierungszone bildet, enthält eine Schüttung eines körnigen, festen Hydrierungskatalysators, der für die Hydrierung von Olefinen aktiv und selektiv ist und gleichzeitig resistent gegenüber der Vergiftung durch organische Schwefelverbindungen ist. Das untere, die dritte Hydrierungszone bildende Katalysatorfestbett dient dagegen vor allem der hydrierenden Entschwefelung (Hydrodesulfurierung, HDS) der enthaltenen organischen Schwefelkomponenten. Auch solche Katalysatoren sind an sich bekannt und im Handel erhältlich; sie basieren oft auf den Aktivkomponenten Nickel-Molybdän (NiMo) bzw. Cobalt-Molybdän (CoMo).

Über Leitung 52 wird der HDS-Produktstrom aus dem Olefin-Hydrierungsreaktor ausgeleitet. Er enthält nun weitgehend nur noch hydrierte und somit gesättigte Kohlenwasserstoffe und Schwefelwasserstoff. Dieser Stoffstrom wird über Leitung 60 in einen ersten Adsorber 61 eingeleitet, der im vorliegenden Beispiel zwei als Festbetten ausgestaltete Adsorptionszonen enthält. Die obere Adsorptionszone ist mit einer Schüttung eines für die Adsorption von Chloriden wirksamen, festen Adsorbens auf Basis von Aluminiumoxid ausgestattet. Die untere Adsorptionszone enthält eine Schüttung eines festen Sorptionsmittels auf Zinkoxid-Basis für die Entfernung von Schwefelwasserstoff. Beide Sorptionsmittel sind an sich bekannt und im Handel erhältlich.

Über Leitung 62 wird ein an Schwefelwasserstoff und Chloriden abgereicherter erster Adsorberproduktstrom aus dem ersten Adsorber 61 ausgeleitet und über Leitung 70 in einen zweiten Adsorber 71 eingeleitet, der im in gleicher Weise aufgebaut und befüllt ist wie der erste Adsorber 61. Der zweite Adsorber dient bei Serienschaltung des ersten und zweiten Adsorbers zur Nachbehandlung des ersten Adsorberproduktstroms, wodurch ein zweiter, weiter an Schwefelwasserstoff und Chloriden abgereicherter erster Adsorberproduktstrom gewonnen wird, der über Leitung 72 aus dem zweiten Adsorber 71 ausgeleitet wird.

Die von der Leitung 60 abzweigende Leitung 63, das im Leitungsweg 63 angeordnete Ventil 64 sowie weitere, nicht bildlich dargestellte Absperrvorrichtungen und Hilfsleitungen dienen beispielsweise der Schaltung eines Bypass um den ersten Adsorber 61, falls an letzterem im laufenden Betrieb Revisionsarbeiten, beispielsweise ein Austausch der enthaltenen Sorptionsmittel, durchgeführt werden müssen.

Über Leitung 72 wird der nunmehr vollständig vorbehandelte, gemischte Feedstrom aus dem Verfahren bzw. der Vorrichtung ausgeleitet. Er kann nunmehr einer Dampfreformierungsanlage zugeführt werden. Da der Feedstrom aufgrund seiner Herkunft und Vorbehandlung einen signifikanten Anteil höherer Kohlenwasserstoffe enthält, empfiehlt es sich, ihn zunächst einer Vorreformierung (Prereforming) zu unterziehen, mit der die höheren Kohlenwasserstoffe in Methan gespalten und/oder bereits teilweise zu Synthesegasbestandteilen umgesetzt werden.

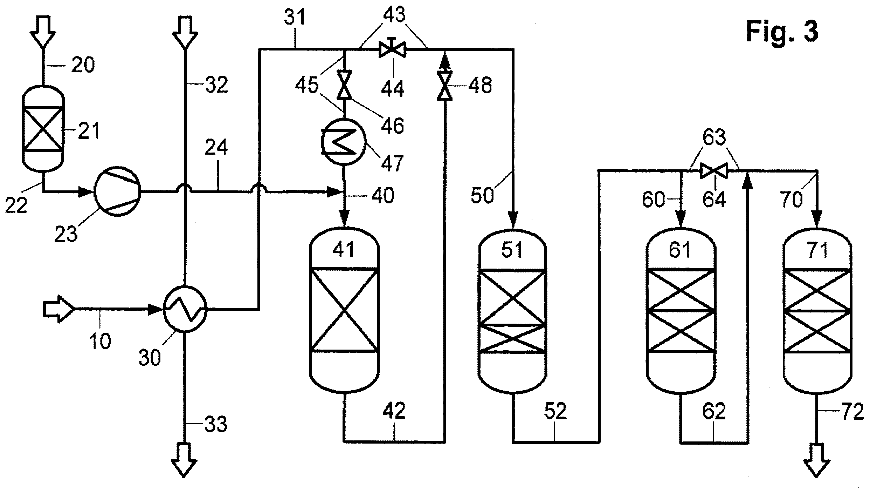

In der in Fig. 3 wiedergegebenen, schematischen Darstellung des erfindungsgemäßen Verfahrens bzw. der erfindungsgemäßen Vorrichtung entsprechen gleiche Bezugszeichen grundsätzlich den Verfahrensschritten und Vorrichtungsbestandteilen, wie sie bereits bei der Erläuterung der Fig. 1 beschrieben wurde. Auch die jeweiligen Verfahrensbedingungen, Arbeitsschritte, Vorrichtungsbestandteile und Hilfsstoffe sind gleich, sofern nicht nachfolgend anders beschrieben.

Im Unterschied zu anderen, nicht erfindungsgemäßen Ausgestaltungen wird nun der erste Einsatzstrom (Erdgas) vor dem Aufheizen im Wärmetauscher 30 nicht mit dem zweiten Einsatzstrom (Raffinerieabgas) zusammengeführt, sondern allein im Wärmetauscher aufgeheizt. Dies hat den Vorteil, dass die Gefahr von Koksablagerungen im Wärmetauscher 30 erheblich reduziert wird, da die Konzentration ungesättigter Verbindungen in dem in Leitung 10 geführten Fluidstrom erheblich kleiner, oft sogar gleich Null ist. Auf einen Bypass um den Wärmetauscher 30, der den Temperaturanstieg beim Aufheizen reduzieren soll, kann daher verzichtet werden.

Der aufgeheizte erste Einsatzstrom verlässt über Leitung 31 den Wärmetauscher 30 und wird in einen ersten und zweiten Hydrierungsteilstrom aufgeteilt, die in den Leitungen 45 und 43 weitergeführt werden. Das Ventil 44 ist nunmehr als Regelventil ausgestaltet und dient mit weiteren, teilweise bildlich nicht dargestellten Regeleinrichtungen zur Einstellung der Mengenströme der beiden Hydrierungsteilströme. Über Leitung 45 und ein im Leitungsweg 45 angeordnetes Ventil 46 wird der erste Hydrierungsteilstrom in eine Kühlvorrichtung 47 eingeleitet, die im vorliegenden Beispiel als Luftkühler ausgestaltet ist. Der gekühlte erste Hydrierungsteilstrom wird über Leitung 40 aus der Kühlvorrichtung 47 ausgeleitet und nun mit dem zweiten Einsatzstrom zusammengeführt und vermischt, der über Leitung 24 herangeführt wird, nachdem er zuvor in der oben beschriebenen Weise entmetallisiert und verdichtet wurde.

Von großem Vorteil ist es dabei, dass der zweite Einsatzstrom, der die Olefine und Diolefine enthält, dem gekühlten ersten Hydrierungsteilstrom zugegeben wird und somit an einer relativ kalten Stelle in das Verfahren eingeführt wird. Durch eine entsprechende Einstellung der Kühlleistung der Kühlvorrichtung und/oder des Mengenverhältnisses des ersten Hydrierungsteilstroms zum zweiten Hydrierungsteilstrom wird gewährleistet, dass die Mischung bei Eintritt in den Diolefin-Hydrierungsreaktor 41 (erste Hydrierungszone) eine Temperatur von kleiner als 300 °C, bevorzugt kleiner als 250 °C, meist bevorzugt kleiner als 230 °C aufweist. Diese Maßnahme ist sehr hilfreich zur Vermeidung unerwünschter Crack- und Polymerisationsreaktionen der in der Mischung enthaltenen Olefine und Diolefine. Von besonderem Vorteil ist es dabei, dass der zweite Einsatzstrom vor der Umsetzung der Diolefine in der ersten Hydrierungszone nicht mehr mit Wärmeaustauschflächen von Wärmetauschern, beispielweise des Wärmetauschers 30, in Berührung kommt. Da diese aufgrund von Wärmeübergangslimitierungen stets heißer sein müssen als die gewünschte Austrittstemperatur des Fluidstroms aus dem Wärmetauscher, kommt es an solchen Wärmeaustauschflächen verstärkt zum Zerfall ungesättigter Kohlenwasserstoffe zu Koks.

Die aus dem gekühlten ersten Hydrierungsteilstrom und dem zweiten Einsatzstrom gebildete Mischung wird über Leitung 40 dem Diolefin-Hydrierungsreaktor 41 als erstem Hydrierungsreaktor aufgegeben, der hinsichtlich seiner Merkmale und seines Betriebs der oben erörterten ersten Ausgestaltung der Erfindung entspricht. Durch entsprechende Anpassung beispielsweise der Kühlleistung der Kühlvorrichtung wird die Eintrittstemperatur in den Diolefin-Hydrierungsreaktor auf den optimalen Wert eingestellt.

Über Leitung 42 und das im Leitungsweg 42 befindliche Ventil 48 wird ein an Diolefinen abgereicherter Diolefin-Hydrierungsproduktstrom aus dem Diolefin-Hydrierungsreaktor ausgeleitet und mit dem über Leitung 43 herangeführten zweiten Hydrierungsteilstrom vereinigt. Die somit erhaltene Mischung wird über Leitung 50 zum Olefin-Hydrierungsreaktor 51 geführt (zweite Hydrierungszone). Ab dem Bezugszeichen 50 entspricht die zweite Ausgestaltung der ersten Ausgestaltung der Erfindung.

### Zahlenbeispiele

In den nachfolgenden Zahlenbeispielen wird die Wirkungsweise der Erfindung anhand der Ergebnisse von Simulationsrechnungen verdeutlicht. Auf die Berücksichtigung organischer Schwefelkomponenten wurde dabei verzichtet, da für die sich ergebenden Temperaturverläufe die Hydrierung der Mono- und Diolefine maßgeblich ist.

Für beide Beispiele wird von Erdgas als erstem Einsatzstrom und einem Raffinerieabgas als zweitem Einsatzstrom ausgegangen. Die Zusammensetzungen des ersten und des zweiten Einsatzstroms sind den Spalten für Leitung 10 und Leitung 24 in der angegebenen Stoffstromtabelle zu entnehmen. Alle weiteren Angaben in der Stoffstromtabelle gelten nur für Beispiel 2. Der Wasserstoffgehalt des Raffinerieabgases ist für die erfindungsgemäßen Hydrierungsschritte ausreichend, so dass auf die Rückführung von Wasserstoff aus dem Wasserstoff-Produktstrom der Dampfreformierungsanlage verzichtet werden kann.

### Vergleichsbeispiel 1

Gemäß dieser nicht erfindungsgemäßen Ausgestaltung wird Erdgas bei Raumtemperatur (25 °C) als erster Einsatzstrom über Leitung 10 zum Wärmetauscher 30 geführt. Ein Raffinerieabgas wird als zweiter Einsatzstrom zunächst im Absorber 21 entmetallisiert und anschließend im Verdichter 23 verdichtet und weist dann eine Temperatur von 81 °C auf. Über Leitung 24 wird der zweite Einsatzstrom mit dem ersten Einsatzstrom zusammengeführt. Im Wärmetauscher 30 werden die vermischten Einsatzströme so aufgeheizt, dass die Temperatur in Leitung 40 vor Eintritt in den Diolefin-Hydrierungsreaktor 41 260 °C beträgt. Durch die exotherm verlaufende Hydrierung der Diolefine und eines Teils der Olefine beträgt die Temperatur in Leitung 50 vor Eintritt in die zweite Hydrierungsstufe (Reaktor 51, Olefin-Hydrierung + HDS) rund 290 °C. Durch die abermals freiwerdende Reaktionsenthalpie der Hydrierung der Olefine und Schwefelverbindungen beträgt die Temperatur am Austritt des Reaktors 51 rund 360 °C (Leitung 52). Mit einer geringfügig unter diesem Wert liegenden Temperatur tritt der Gasstrom über Leitung 60 in den Adsorber 61 ein, in dem der bei der Hydrodesulfurierung gebildete Schwefelwasserstoff an Zinkoxid gebunden wird.

Vorteilhaft bei der im Vergleichsbeispiel 11 dargestellten Ausgestaltung ist es, dass am Eintritt des Diolefin-Hydrierungsreaktors 41 und des Olefin-Hydrierungs-bzw. HDS-Reaktors 51 eine Temperatur von 300 °C nicht überschritten wird. Die in US 3477832 definierte Obergrenze von 343 °C wird sicher eingehalten und somit die Ablagerung von Koks auf den Hydrierungskatalysatoren und Adsorptionsmittels verhindert.

### Beispiel 2

Die Zusammensetzung und Eigenschaften wichtiger Stoffströme im Zusammenhang mit der nachfolgenden Erläuterung sind der angegebenen Stoffstromtabelle zu entnehmen.

Gemäß dieser Ausgestaltung der Erfindung wird Erdgas bei Raumtemperatur (25 °C) als erster Einsatzstrom über Leitung 10 zum Wärmetauscher 30 geführt. Im Wärmetauscher 30 wird der Erdgasstrom ohne Beimischen des zweiten Einsatzstroms so aufgeheizt, dass die Gastemperatur in Leitung 31 vor der Verzweigung in die Leitungen 43 und 45 368 °C beträgt. Der über Leitung 45 abgezweigte erste Hydrierungsteilstrom wird in die Kühlvorrichtung 47 eingeleitet, dort abgekühlt und über Leitung 40 mit dem zweiten Einsatzstrom zusammengeführt, der über Leitung 24 herangeführt wird und eine Temperatur von 81 °C aufweist. Die erhaltene Mischung tritt dann mit einer Temperatur von 222 °C in den Diolefin-Hydrierungsreaktor 41 ein und verlässt diesen mit einer Temperatur von 229 °C in Leitung 42. Nach Zusammenführen und Vermischen mit dem zweiten Hydrierungsteilstrom (Leitung 43) tritt die so erhaltene Mischung mit einer Temperatur von 313 °C in den Olefin-Hydrierungs- bzw. HDS-Reaktor 51 ein und verlässt diesen mit einer Temperatur von 354 °C in Leitung 52.

**Stoffstromtabelle, Beispiel 2, zweite Ausgestaltung der Erfindung**

| **Leitung Nr.** | **10** | **24** | **31** | **40** | **42** | **50** | **52** |
|---|---|---|---|---|---|---|---|
| Bezeichnung | erster Einsatzstrom (Erdgas) | zweiter Einsatzstrom (Raffinerieabgas) | aufgeheizter erster Einsatzstrom (Erdgas) | Feed erste Hydrierungszone (Diolefin-H.) | Produkt erste Hydrierungszone (Diolefin-H.) | Feed zweite Hydrierurigszone (Olefin-H. +HDS) | Produkt zweite Hydrierungszone (Olefin-H. +HDS) |
| Molstrom (kmol/h) | 1519 | 428 | 1519 | 808 | 805 | 1945 | 1910 |
| Massenstrom (kg/h) | 27610 | 7605 | 27610 | 14508 | 14508 | 35216 | 35216 |
| Temperatur (°C) | 25 | 81 | 368 | 222 | 229 | 313 | 354 |
| | | | | | | | |
| Molenbruch (%) | | | | | | | |
| H₂ | 0,00 | 21,20 | 0,02 | 11,24 | 10,91 | 4,53 | 2.67 |
| CO | 0,00 | 1,30 | 0,00 | 0,69 | 0,62 | 0,26 | 0,13 |
| CO₂ | 1,07 | 0,10 | 1,07 | 0,56 | 0,56 | 0,86 | 087 |
| H₂O | 0,00 | 0,00 | 0,00 | 0,00 | 0,07 | 0,03 | 016 |
| N₂ | 2,00 | 3,50 | 2,00 | 2,79 | 2,80 | 2,33 | 2,37 |
| O₂ | 0,00 | 0,00 | 0,00 | 0,00 | 0,00 | 0,00 | 0,00 |
| Ar | 0,00 | 0,00 | 0,00 | 0,00 | 0,00 | 0,00 | 0,00 |
| Methan | 89,20 | 49,25 | 89,18 | 68,02 | 68,29 | 80,53 | 82,12 |
| Ethan | 5,35 | 15,40 | 5,35 | 10,67 | 10,83 | 7,62 | 8,78 |
| Ethen | 0,00 | 4,80 | 0,00 | 2,54 | 2,42 | 1,00 | 0,00 |
| Ethin | 0,00 | 0,00 | 0,00 | 0,00 | 0,00 | 0,00 | 0,00 |
| Propan | 1,52 | 1,60 | 1,52 | 1,56 | 1,57 | 1,54 | 1,97 |
| Propen | 0,00 | 1,80 | 0,00 | 0,95 | 0,96 | 0,40 | 0,00 |
| n-Butan | 0,32 | 0,40 | 0,32 | 0,36 | 0,36 | 0,34 | 0,34 |
| i-Butan | 0,26 | 0,00 | 0,26 | 0,12 | 0,12 | 0,20 | 0,33 |
| Butene | 0,00 | 0,50 | 0,00 | 0,26 | 0,29 | 0,1 2 | 0,33 |
| Butadien | 0,00 | 0,05 | 0,00 | 0,03 | 0,00 | 0,00 | 0,00 |
| n-Pentan | 0,08 | 0,10 | 0,08 | 0,09 | 0,09 | 0,08 | 0.09 |
| i-Pentan | 0,08 | 0,00 | 0,08 | 0,04 | 0,04 | 0,06 | 0,06 |
| n-Hexan | 0,12 | 0,00 | 0,12 | 0,06 | 0,06 | 0,09 | 0,10 |

Insgesamt weist die in Beispiel 2 erläuterte Ausgestaltung der Erfindung dieselben Vorteile auf, die im Zusammenhang mit Beispiel 1 erörtert wurden. Als weiterer Vorteil ergibt sich, dass der zweite Einsatzstrom, der den weitaus überwiegenden Anteil der Olefine und Diolefine enthält, an einer relativ kalten Stelle in das Verfahren eingeführt wird und insbesondere nicht gemeinsam mit dem ersten Einsatzstrom im Wärmetauscher 30 aufgeheizt wird. Durch eine entsprechende Einstellung der Kühlleistung der Kühlvorrichtung und/oder des Mengenverhältnisses des ersten Hydrierungsteilstroms zum zweiten Hydrierungsteilstrom wird gewährleistet" dass die Mischung bei Eintritt in den Diolefin-Hydrierungsreaktor 41 die gewünschte Temperatur von unter 230 °C aufweist.

### Gewerbliche Anwendbarkeit

Mit der Erfindung werden ein Verfahren und eine Vorrichtung zum Herstellen eines gemischten Feedstroms für eine Dampfreformierungsanlage bereitgestellt. Als Einsatzströme kommen dabei Erdgas und höhere Kohlenwasserstoffströme in Betracht, die einen signifikanten Anteil ungesättigter Kohlenwasserstoffe sowie organische Schwefelverbindungen aufweisen. Durch die erfindungsgemäße schrittweise Hydrierung und die optimierte Temperaturführung wird eine Überhitzung der Einsatzstoffe vermieden, die zum thermischen Cracken insbesondere der enthaltenen ungesättigten Kohlenwasserstoffe, zu unerwünschten Koksablagerungen und somit zu Verstopfungen der Vorrichtung und nachgeschalteter Anlagen sowie zur beschleunigten Desaktivierung der verwendeten Katalysatoren führt. Hierdurch erhöht sich die Anlagenverfügbarkeit und daher die Wirtschaftlichkeit der nachgeschalteten Dampfreformierungsanlage.

### Bezugszeichenliste

- 10: Leitung
- 20: Leitung
- 21: Adsorber (Entmetallisierung)
- 22: Leitung
- 23: Verdichter
- 24: Leitung
- 30: Wärmetauscher
- 31: Leitung
- 32: Leitung
- 33: Leitung
- 34: Leitung
- 35: Ventil
- 40: Leitung
- 41: Diolefin-Hydrierungsreaktor (erste Hydrierungszone)
- 42: Leitung
- 43: Leitung
- 44: Ventil
- 45: Leitung
- 46: Ventil
- 47: Kühlvorrichtung
- 48: Leitung
- 50: Leitung
- 51: Olefin-Hydrierungs- + HDS-Reaktor (zweite + dritte Hydrierungszone)
- 52: Leitung
- 60: Leitung
- 61: Adsorber
- 62: Leitung
- 63: Leitung
- 64: Ventil
- 70: Leitung
- 71: Adsorber
- 72: Leitung

## Patentansprüche

1. Verfahren zum Herstellen eines gemischten Feedstroms für eine mindestens eine Reformierungsstufe enthaltende Dampfreformierungsanlage, umfassend einen ersten, Methan enthaltenden Einsatzstrom und einen zweiten, höhere Kohlenwasserstoffe, Olefine und Diolefine umfassenden Einsatzstrom, wobei der erste und/oder der zweite Einsatzstrom auch Schwefelverbindungen enthält und wobei das Verfahren folgende Schritte umfasst:
(a) Bereitstellen des ersten Einsatzstroms und des zweiten Einsatzstroms,
(b) Aufheizen des ersten Einsatzstroms in einer ersten Heizvorrichtung,
(c) Zusammenführen und Vermischen mindestens eines Teils des ersten Einsatzstroms mit dem zweiten Einsatzstrom, Einleiten dieser Mischung in eine erste Hydrierungszone, mindestens teilweises Umsetzen der Diolefine in der ersten Hydrierungszone unter Diolefin-Hydrierungsbedingungen, Ausleiten eines Diolefin-Hydrierungsproduktstroms aus der ersten Hydrierungszone,
(d) Einleiten des Diolefin-Hydrierungsproduktstroms in eine zweite Hydrierungszone, mindestens teilweises Umsetzen der Olefine in der zweiten Hydrierungszone unter Olefin-Hydrierungsbedingungen, Ausleiten eines Olefin-Hydrierungsproduktstroms aus der zweiten Hydrierungszone,
(e) Einleiten des Olefin-Hydrierungsproduktstroms in eine dritte Hydrierungszone, mindestens teilweises Umsetzen der Schwefelverbindungen in der dritten Hydrierungszone unter Bedingungen der Hydrodesulfurierung (HDS) zu entschwefelten Kohlenwasserstoffen und Schwefelwasserstoff, Ausleiten eines HDS-Produktstroms aus der dritten Hydrierungszone,
(f) Einleiten des HDS-Produktstroms in mindestens eine Adsorptionszone, gefüllt mit einem für Schwefelwasserstoff selektiven Adsorbens, mindestens teilweise Abscheidung des Schwefelwasserstoffs durch Adsorption an dem Adsorbens, Ausleiten eines an Schwefelwasserstoff abgereicherten Adsorberproduktstroms aus der Adsorptionszone,
(g) Einleiten des Adsorberproduktstroms als gemischter Feedstrom in mindestens eine Reformierungsstufe,
**dadurch gekennzeichnet, dass**
- der erste Einsatzstrom nach dem Aufheizen in der ersten Heizvorrichtung in einen ersten Hydrierungsteilstrom und einen zweiten Hydrierungsteilstrom aufgeteilt wird,
- der erste Hydrierungsteilstrom in eine Kühlvorrichtung eingeleitet wird,
- aus der Kühlvorrichtung ein gekühlter erster Hydrierungsteilstrom ausgeleitet wird,
- der gekühlte erste Hydrierungsteilstrom mit dem zweiten Einsatzstrom zusammengeführt und vermischt wird,
- die somit erhaltene Mischung in die erste Hydrierungszone eingeleitet wird.

2. Verfahren nach Anspruch 1, **dadurch gekennzeichnet, dass** das Zusammenführen und Vermischen mindestens eines Teils des ersten Einsatzstroms mit dem zweiten Einsatzstrom so erfolgt, dass die Mischung bei Eintritt in die erste Hydrierungszone eine Temperatur von kleiner als 300 °C, bevorzugt kleiner als 250 °C, meist bevorzugt kleiner als 230 °C aufweist.

3. Verfahren nach Anspruch 1 oder 2, **dadurch gekennzeichnet, dass** der Diolefin-Hydrierungsproduktstrom mit dem zweiten Hydrierungsteilstrom zusammengeführt und vermischt wird und die somit erhaltene Mischung in die zweite Hydrierungszone eingeleitet wird.

4. Verfahren nach Anspruch 2 oder 3, **dadurch gekennzeichnet, dass** als Kühlvorrichtung ein Luftkühler oder ein Wärmetauscher verwendet wird, wobei bei Verwendung eines Wärmetauschers die Kühlung bevorzugt im indirekten Wärmetausch gegen mindestens einen Teil des ersten Einsatzstromes vor der ersten Heizvorrichtung erfolgt.

5. Verfahren nach einem der vorigen Ansprüche, **dadurch gekennzeichnet, dass** die Kühlleistung der Kühlvorrichtung und/oder das Mengenverhältnis des ersten Hydrierungsteilstroms zum zweiten Hydrierungsteilstrom so gewählt wird, dass die Mischung bei Eintritt in die erste Hydrierungszone eine Temperatur von kleiner als 300 °C, bevorzugt kleiner als 250 °C, meist bevorzugt kleiner als 230 °C aufweist.

6. Verfahren nach einem der vorigen Ansprüche, **dadurch gekennzeichnet, dass** der zweite Einsatzstrom vor dem Zusammenführen und Vermischen mit mindestens einem Teils des ersten Einsatzstroms in eine Adsorptionszone eingeleitet wird, die mit einem für Metalle selektiven Adsorbens gefüllt ist.

7. Verfahren nach einem der vorigen Ansprüche, **dadurch gekennzeichnet, dass** die erste Heizvorrichtung als Wärmetauscher ausgestaltet ist, wobei der erste Einsatzstrom im indirekten Wärmetausch gegen einen heißen Rohsynthesegas-Produktstrom aus der Dampfreformierungsanlage, gegen einen heißen Rauchgasstrom aus dem Reformerofen oder gegen einen heißen Produktgasstrom aus der der Dampfreformierungsanlage nachgeschalteten CO-Konvertierungsanlage (CO-Shift) aufgeheizt wird.

8. Verfahren nach einem der vorigen Ansprüche, **dadurch gekennzeichnet, dass** die Dampfreformierungsanlage eine Vorreformierungsstufe (Prereformer) umfasst, in der höhere Kohlenwasserstoffe unter Vorreformierungsbedingungen mindestens teilweise zu Methan umgesetzt werden.

9. Vorrichtung zum Herstellen eines gemischten Feedstroms für eine mindestens eine Reformierungsstufe enthaltende Dampfreformierungsanlage, umfassend einen ersten, Methan enthaltenden Einsatzstrom und einen zweiten, höhere Kohlenwasserstoffe, Olefine und Diolefine umfassenden Einsatzstrom, wobei der erste und/oder der zweite Einsatzstrom auch Schwefelverbindungen enthält und wobei die Vorrichtung folgende, in Fluidverbindung miteinander stehende Bestandteile umfasst:
(a) Mittel zum Bereitstellen des ersten Einsatzstroms und des zweiten Einsatzstroms,
(b) eine erste Heizvorrichtung zum Aufheizen des ersten Einsatzstroms,
(c) Mittel zum Zusammenführen und Vermischen mindestens eines Teils des ersten Einsatzstroms mit dem zweiten Einsatzstrom, eine erste Hydrierungszone, Mittel zum Einleiten dieser Mischung in die erste Hydrierungszone, Mittel zum Ausleiten eines Diolefin-Hydrierungsproduktstroms aus der ersten Hydrierungszone,
(d) eine zweite Hydrierungszone, Mittel zum Einleiten des Diolefin-Hydrierungsproduktstroms in die zweite Hydrierungszone, Mittel zum Ausleiten eines Olefin-Hydrierungsproduktstroms aus der zweiten Hydrierungszone,
(e) eine dritte Hydrierungszone (HDS), Mittel zum Einleiten des Olefin-Hydrierungsproduktstroms in die dritte Hydrierungszone, Mittel zum Ausleiten eines HDS-Produktstroms aus der dritten Hydrierungszone,
(f) eine Adsorptionszone, gefüllt mit einem für Schwefelwasserstoff selektiven Adsorbens, Mittel zum Einleiten des HDS-Produktstroms in die mindestens eine Adsorptionszone, Mittel zum Ausleiten eines an Schwefelwasserstoff abgereicherten Adsorberproduktstroms aus der Adsorptionszone,
(g) mindestens eine Reformierungsstufe, Mittel zum Einleiten des Adsorberproduktstroms als gemischter Feedstrom in die mindestens eine Reformierungsstufe,
**dadurch gekennzeichnet, dass** die Vorrichtung ferner umfasst:
- eine Auftrennvorrichtung zum Aufteilen des ersten Einsatzstroms nach dem Aufheizen in der ersten Heizvorrichtung in einen ersten Hydrierungsteilstrom und einen zweiten Hydrierungsteilstrom,
- eine Kühlvorrichtung und Mittel zum Einleiten des ersten Hydrierungsteilstroms in die Kühlvorrichtung,
- Mittel zum Ausleiten eines gekühlten ersten Hydrierungsteilstroms aus der Kühlvorrichtung,
- Mittel zum Zusammenführen und Vermischen des gekühlten ersten Hydrierungsteilstroms mit dem zweiten Einsatzstrom,
- Mittel zum Einleiten der somit erhaltenen Mischung in die erste Hydrierungszone.

10. Vorrichtung nach Anspruch 9, **dadurch gekennzeichnet, dass** die Vorrichtung ferner Mittel umfasst, die es ermöglichen, das Zusammenführen und Vermischen mindestens eines Teils des ersten Einsatzstroms mit dem zweiten Einsatzstrom so durchzuführen, dass die Mischung bei Eintritt in die erste Hydrierungszone eine Temperatur von kleiner als 300 °C, bevorzugt kleiner als 250 °C, meist bevorzugt kleiner als 230 °C aufweist.

11. Vorrichtung nach Anspruch 9 oder 10, **dadurch gekennzeichnet, dass** die Vorrichtung ferner Mittel zum Zusammenführen und Vermischen des Diolefin-Hydrierungsproduktstroms mit dem zweiten Hydrierungsteilstrom und zum Einleiten der erhaltenen Mischung in die zweite Hydrierungszone umfasst.

12. Vorrichtung nach Anspruch 9 bis 11, **dadurch gekennzeichnet, dass** als Kühlvorrichtung ein Luftkühler oder ein Wärmetauscher verwendet wird, wobei bei Verwendung eines Wärmetauschers die Kühlung bevorzugt im indirekten Wärmetausch gegen mindestens einen Teil des ersten Einsatzstromes vor der ersten Heizvorrichtung erfolgt.

13. Vorrichtung nach einem der vorigen Ansprüche, **dadurch gekennzeichnet, dass** die Kühlleistung der Kühlvorrichtung so einstellbar ist und/oder dass das Mengenverhältnis des ersten Hydrierungsteilstroms zum zweiten Hydrierungsteilstrom mittels mindestens einer Durchflussregelungsvorrichtung so gewählt werden kann, dass die Mischung bei Eintritt in die erste Hydrierungszone eine Temperatur von kleiner als 300 °C, bevorzugt kleiner als 250 °C, meist bevorzugt kleiner als 230 °C aufweist.

14. Vorrichtung nach einem der vorigen Ansprüche, **dadurch gekennzeichnet, dass** die Vorrichtung ferner eine Adsorptionszone umfasst, die mit einem für Metalle selektiven Adsorbens gefüllt ist und die dem oder den Mitteln zum Zusammenführen und Vermischen des zweiten Einsatzstroms mit mindestens einem Teils des ersten Einsatzstroms vorgeschaltet ist.

15. Vorrichtung nach einem der vorigen Ansprüche, **dadurch gekennzeichnet, dass** die erste Heizvorrichtung als Wärmetauscher ausgestaltet und geeignet ist, einen indirekten Wärmetausch zwischen dem ersten Einsatzstrom und einem heißen Rohsynthesegas-Produktstrom aus der Dampfreformierungsanlage, einem heißen Rauchgasstrom aus dem Reformerofen oder einem heißen Produktgasstrom aus der der Dampfreformierungsanlage nachgeschalteten CO-Konvertierungsanlage (CO-Shift) durchzuführen.

16. Vorrichtung nach einem der vorigen Ansprüche, **dadurch gekennzeichnet, dass** die Dampfreformierungsanlage eine Vorreformierungsstufe (Prereformer) umfasst, in der höhere Kohlenwasserstoffe unter Vorreformierungsbedingungen mindestens teilweise zu Methan umgesetzt werden.

## Claims

1. A process for producing a mixed feed stream for a steam reforming plant containing at least one reforming stage, comprising a first feed stream containing methane and a second feed stream comprising higher hydrocarbons, olefins and diolefins, wherein the first and/or the second feed stream also contains sulfur compounds, and wherein the process comprises the following steps:
(a) providing the first feed stream and the second feed stream,
(b) heating the first feed stream in a first heating device,
(c) combining and mixing at least a part of the first feed stream with the second feed stream, introducing this mixture into a first hydrogenation zone, at least partly converting the diolefins in the first hydrogenation zone under diolefin hydrogenation conditions, discharging a diolefin hydrogenation product stream from the first hydrogenation zone,
(d) introducing the diolefin hydrogenation product stream into a second hydrogenation zone, at least partly converting the olefins in the second hydrogenation zone under olefin hydrogenation conditions, discharging an olefin hydrogenation product stream from the second hydrogenation zone,
(e) introducing the olefin hydrogenation product stream into a third hydrogenation zone, at least partly converting the sulfur compounds in the third hydrogenation zone under conditions of the hydrodesulfurization (HDS) to desulfurized hydrocarbons and hydrogen sulfide, discharging an HDS product stream from the third hydrogenation zone,
(f) introducing the HDS product stream into at least one adsorption zone, filled with an adsorbent selective for hydrogen sulfide, at least partly separating the hydrogen sulfide by adsorption on the adsorbent, discharging an adsorber product stream depleted of hydrogen sulfide from the adsorption zone,
(g) introducing the adsorber product stream as mixed feed stream into at least one reforming stage, **characterized in that**
- after heating in the first heating device, the first feed stream is split up into a first hydrogenation partial stream and a second hydrogenation partial stream,
- the first hydrogenation partial stream is introduced into a cooling device,
- a cooled first hydrogenation partial stream is discharged from the cooling device,
- the cooled first hydrogenation partial stream is combined and mixed with the second feed stream,
- the mixture thus obtained is introduced into the first hydrogenation zone.

2. The process according to claim 1, **characterized in that** combining and mixing of at least a part of the first feed stream with the second feed stream is effected such that on entry into the first hydrogenation zone the mixture has a temperature of less than 300 °C, preferably less than 250 °C, most preferably less than 230 °C.

3. The process according to claim 1 or 2, **characterized in that** the diolefin hydrogenation product stream is combined and mixed with the second hydrogenation partial stream and the mixture thus obtained is introduced into the second hydrogenation zone.

4. The process according to claim 2 or 3, **characterized in that** an air cooler or a heat exchanger is used as cooling device, wherein in use of a heat exchanger cooling preferably is effected by indirect heat exchange against at least a part of the first feed stream before the first heating device.

5. The process according to any of the preceding claims, **characterized in that** the cooling capacity of the cooling device and/or the quantity ratio of the first hydrogenation partial stream to the second hydrogenation partial stream is chosen such that on entry into the first hydrogenation zone the mixture has a temperature of less than 300 °C, preferably less than 250 °C, most preferably less than 230 °C.

6. The process according to any of the preceding claims, **characterized in that** prior to combining and mixing with at least a part of the first feed stream the second feed stream is introduced into an adsorption zone which is filled with an adsorbent selective for metals.

7. The process according to any of the preceding claims, **characterized in that** the first heating device is designed as heat exchanger, wherein the first feed stream is heated by indirect heat exchange against a hot raw synthesis gas product stream from the steam reforming plant, against a hot flue gas stream from the reformer furnace or against a hot product gas stream from the CO conversion plant (CO shift) downstream of the stream reforming plant.

8. The process according to any of the preceding claims, **characterized in that** the steam reforming plant comprises a pre-reforming stage (prereformer) in which higher hydrocarbons are at least partly converted to methane under pre-reforming conditions.

9. An apparatus for producing a mixed feed stream for a steam reforming plant containing at least one reforming stage, comprising a first feed stream containing methane and a second feed stream comprising higher hydrocarbons, olefins and diolefins, wherein the first and/or the second feed stream also contains sulfur compounds, and wherein the apparatus comprises the following components which are in fluid connection with each other:
(a) means for providing the first feed stream and the second feed stream,
(b) a first heating device for heating the first feed stream,
(c) means for combining and mixing at least a part of the first feed stream with the second feed stream, a first hydrogenation zone, means for introducing this mixture into the first hydrogenation zone, means for discharging a diolefin hydrogenation product stream from the first hydrogenation zone,
(d) a second hydrogenation zone, means for introducing the diolefin hydrogenation product stream into the second hydrogenation zone, means for discharging an olefin hydrogenation product stream from the second hydrogenation zone,
(e) a third hydrogenation zone (HDS), means for introducing the olefin hydrogenation product stream into the third hydrogenation zone, means for discharging an HDS product stream from the third hydrogenation zone,
(f) an adsorption zone, filled with an adsorbent selective for hydrogen sulfide, means for introducing the HDS product stream into the at least one adsorption zone, means for discharging an adsorber product stream depleted of hydrogen sulfide from the adsorption zone,
(g) at least one reforming stage, means for introducing the adsorber product stream as mixed feed stream into the at least one reforming stage, **characterized in that** the apparatus furthermore comprises:
- a separating device for splitting up the first feed stream, after heating in the first heating device, into a first hydrogenation partial stream and a second hydrogenation partial stream,
- a cooling device and means for introducing the first hydrogenation partial stream into the cooling device,
- means for discharging a cooled first hydrogenation partial stream from the cooling device,
- means for combining and mixing the cooled first hydrogenation partial stream with the second feed stream,
- means for introducing the mixture thus obtained into the first hydrogenation zone.

10. The apparatus according to claim 9, **characterized in that** the apparatus furthermore comprises means which provide for carrying out the combining and mixing of at least a part of the first feed stream with the second feed stream such that on entry into the first hydrogenation zone the mixture has a temperature of less than 300 °C, preferably less than 250 °C, most preferably less than 230 °C.

11. The apparatus according to claim 9 or 10, **characterized in that** the apparatus furthermore comprises means for combining and mixing the diolefin hydrogenation product stream with the second hydrogenation partial stream and for introducing the obtained mixture into the second hydrogenation zone.

12. The apparatus according to claim 9 bis 11, **characterized in that** an air cooler or a heat exchanger is used as cooling device, wherein in use of a heat exchanger cooling preferably is effected by indirect heat exchange against at least a part of the first feed stream before the first heating device.

13. The apparatus according to any of the preceding claims, **characterized in that** the cooling capacity of the cooling device can be set and/or the quantity ratio of the first hydrogenation partial stream to the second hydrogenation partial stream can be chosen by means of a flow control device such that on entry into the first hydrogenation zone the mixture has a temperature of less than 300 °C, preferably less than 250 °C, most preferably less than 230 °C.

14. The apparatus according to any of the preceding claims, **characterized in that** the apparatus furthermore comprises an adsorption zone which is filled with an adsorbent selective for metals and which is disposed upstream of the one or more means for combining and mixing the second feed stream with at least a part of the first feed stream.

15. The apparatus according to any of the preceding claims, **characterized in that** the first heating device is designed as heat exchanger and suited to carry out an indirect heat exchange between the first feed stream and a hot raw synthesis gas product stream from the steam reforming plant, a hot flue gas stream from the reformer furnace, or a hot product gas stream from the CO conversion plant (CO shift) downstream of the steam reforming plant.

16. The apparatus according to any of the preceding claims, **characterized in that** the steam reforming plant comprises a pre-reforming stage (prereformer) in which higher hydrocarbons are at least partly converted to methane under pre-reforming conditions.

## Revendications

1. Procédé de production d'un flux d'alimentation mixte pour une installation de reformage à la vapeur contenant au moins un étage de reformage, comprenant un premier flux d'alimentation contenant du méthane et un deuxième flux d'alimentation comprenant des hydrocarbures supérieurs, des oléfines et des dioléfines, dans lequel le premier et/ou le deuxième flux d'alimentation contiennent en outre des composés soufrés, et le procédé comprenant en outre les étapes suivantes :
(a) fourniture du premier flux d'alimentation et du deuxième flux d'alimentation,
(b) chauffage du premier flux d'alimentation dans un premier dispositif de chauffage,
(c) combinaison et mélange d'au moins une partie du premier flux d'alimentation avec le deuxième flux d'alimentation, introduction de ce mélange dans une première zone d'hydrogénation, conversion au moins partielle des dioléfines dans la première zone d'hydrogénation dans des conditions d'hydrogénation de dioléfine, évacuation d'un flux de produit d'hydrogénation de dioléfine depuis la première zone d'hydrogénation,
(d) introduction du flux de produit d'hydrogénation de dioléfine dans une deuxième zone d'hydrogénation, conversion au moins partielle des oléfines dans la deuxième zone d'hydrogénation dans des conditions d'hydrogénation d'oléfine, évacuation d'un flux de produit d'hydrogénation d'oléfine depuis la deuxième zone d'hydrogénation,
(e) introduction du flux de produit d'hydrogénation d'oléfine dans une troisième zone d'hydrogénation, conversion au moins partielle des composés soufrés dans la troisième zone d'hydrogénation dans des conditions de l'hydrodésulfurisation (HDS) en hydrocarbures désulfurés et en sulfure d'hydrogène, évacuation d'un flux de produit HDS depuis la troisième zone d'hydrogénation,
(f) introduction du flux de produit HDS dans au moins une zone d'adsorption, remplie d'un adsorbant sélectif pour le sulfure d'hydrogène, séparation au moins partielle du sulfure d'hydrogène par adsorption sur l'adsorbant, évacuation d'un flux de produit d'adsorbeur appauvri en sulfure d'hydrogène depuis la zone d'adsorption,
(g) introduction du flux de produit d'adsorbeur en tant que flux d'alimentation mixte dans au moins un étage de reformage, **caractérisé en ce que**
- après chauffage dans le premier dispositif de chauffage, le premier flux d'alimentation est divisé en un premier flux partiel d'hydrogénation et un deuxième flux partiel d'hydrogénation,
- le premier flux partiel d'hydrogénation est introduit dans un dispositif de refroidissement,
- un premier flux partiel d'hydrogénation refroidi est évacué depuis le dispositif de refroidissement,
- le premier flux partiel d'hydrogénation refroidi est combiné et mélangé avec le deuxième flux d'alimentation,
- le mélange obtenu ainsi est introduit dans la première zone d'hydrogénation.

2. Procédé selon la revendication 1, **caractérisé en ce que** la combinaison et le mélange d'au moins une partie du premier flux d'alimentation avec le deuxième flux d'alimentation est effectué de sorte qu'à l'entrée dans la première zone d'hydrogénation, le mélange ait une température inférieure à 300 °C, de préférence inférieure à 250 °C, de manière préférée entre toutes inférieure à 230 °C.

3. Procédé selon la revendication 1 ou 2, **caractérisé en ce que** le flux de produit d'hydrogénation de dioléfine est combiné et mélangé avec le deuxième flux partiel d'hydrogénation et le mélange obtenu ainsi est introduit dans la deuxième zone d'hydrogénation.

4. Procédé selon la revendication 2 ou 3, **caractérisé en ce qu'**un refroidisseur d'air ou un échangeur de chaleur est utilisé en tant que dispositif de refroidissement, dans lequel, dans l'utilisation d'un échangeur de chaleur, le refroidissement est, de préférence, effectué par échange de chaleur indirect contre au moins une partie du premier flux d'alimentation avant le premier dispositif de chauffage.

5. Procédé selon l'une quelconque des revendications précédentes, **caractérisé en ce que** la capacité de refroidissement du dispositif de refroidissement et/ou le rapport de quantité du premier flux partiel d'hydrogénation au deuxième flux partiel d'hydrogénation est choisi de sorte qu'à l'entrée dans la première zone d'hydrogénation, le mélange ait une température inférieure à 300 °C, de préférence inférieure à 250 °C, de manière préférée entre toutes inférieure à 230 °C.

6. Procédé selon l'une quelconque des revendications précédentes, **caractérisé en ce que**, avant la combinaison et le mélange avec au moins une partie du premier flux d'alimentation, le deuxième flux d'alimentation est introduit dans une zone d'adsorption qui est remplie avec un adsorbant sélectif pour les métaux.

7. Procédé selon l'une quelconque des revendications précédentes, **caractérisé en ce que** le premier dispositif de chauffage est conçu en tant qu'échangeur de chaleur, dans lequel le premier flux d'alimentation est chauffé par échange de chaleur indirect contre un flux de produit de gaz de synthèse brut chaud provenant de l'installation de reformage à la vapeur, contre un flux de gaz de combustion chaud provenant du four de reformeur ou contre un flux de gaz de produit chaud provenant de l'installation de conversion de CO (déplacement de CO) en aval de l'installation de reformage de flux.

8. Procédé selon l'une quelconque des revendications précédentes, **caractérisé en ce que** l'installation de reformage à la vapeur comprend un étage de préreformage (préreformeur) dans lequel les hydrocarbures supérieurs sont au moins partiellement convertis en méthane dans des conditions de préreformage.

9. Appareil de production d'un flux d'alimentation mixte pour une installation de reformage à la vapeur contenant au moins un étage de reformage, comprenant un premier flux d'alimentation contenant du méthane et un deuxième flux d'alimentation comprenant des hydrocarbures supérieurs, des oléfines et des dioléfines, dans lequel le premier et/ou le deuxième flux d'alimentation contiennent en outre des composés soufrés, et l'appareil comprenant les composants suivants qui sont en raccordement fluidique les uns avec les autres :
(a) des moyens pour fournir le premier flux d'alimentation et le deuxième flux d'alimentation,
(b) un premier dispositif de chauffage pour chauffer le premier flux d'alimentation,
(c) des moyens de combinaison et de mélange d'au moins une partie du premier flux d'alimentation avec le deuxième flux d'alimentation, une première zone d'hydrogénation, des moyens pour introduire ce mélange dans la première zone d'hydrogénation, des moyens pour évacuer un flux de produit d'hydrogénation de dioléfine depuis la première zone d'hydrogénation,
(d) une deuxième zone d'hydrogénation, des moyens pour introduire le flux de produit d'hydrogénation de dioléfine dans la deuxième zone d'hydrogénation, des moyens pour évacuer un flux de produit d'hydrogénation d'oléfine depuis la deuxième zone d'hydrogénation,
(e) une troisième zone d'hydrogénation (HDS), des moyens pour introduire le flux de produit d'hydrogénation d'oléfine dans la troisième zone d'hydrogénation, des moyens pour évacuer un flux de produit HDS depuis la troisième zone d'hydrogénation,
(f) une zone d'adsorption, remplie avec un adsorbant sélectif pour le sulfure d'hydrogène, des moyens pour introduire le flux de produit HDS dans l'au moins une zone d'adsorption, des moyens pour évacuer un flux de produit d'adsorbeur appauvri en sulfure d'hydrogène depuis la zone d'adsorption,
(g) au moins un étage de reformage, des moyens pour introduire le flux de produit d'adsorbeur en tant que flux d'alimentation mixte dans l'au moins un étage de reformage, **caractérisé en ce que** l'appareil comprend en outre :
- un dispositif de séparation pour diviser le premier flux d'alimentation, après chauffage dans le premier dispositif de chauffage, dans un premier flux partiel d'hydrogénation et un deuxième flux partiel d'hydrogénation,
- un dispositif de refroidissement et des moyens pour introduire le premier flux partiel d'hydrogénation dans le dispositif de refroidissement,
- des moyens pour évacuer un premier flux partiel d'hydrogénation refroidi depuis le dispositif de refroidissement,
- des moyens pour combiner et mélanger le premier flux partiel d'hydrogénation refroidi avec le deuxième flux d'alimentation,
- des moyens pour introduire le mélange obtenu ainsi dans la première zone d'hydrogénation.

10. Appareil selon la revendication 9, **caractérisé en ce que** l'appareil comprend en outre des moyens qui permettent la conduite de la combinaison et du mélange d'au moins une partie du premier flux d'alimentation avec le deuxième flux d'alimentation, de sorte qu'à l'entrée dans la première zone d'hydrogénation, le mélange ait une température inférieure à 300 °C, de préférence inférieure à 250 °C, de manière préférée entre toutes inférieure à 230 °C.

11. Appareil selon la revendication 9 ou 10, **caractérisé en ce que** l'appareil comprend en outre des moyens de combinaison et de mélange du flux de produit d'hydrogénation de dioléfine avec le deuxième flux partiel d'hydrogénation et pour introduire le mélange obtenu dans la deuxième zone d'hydrogénation.

12. Appareil selon les revendication 9 à 11, **caractérisé en ce qu'**un refroidisseur d'air ou un échangeur de chaleur est utilisé en tant que dispositif de refroidissement, dans lequel, dans l'utilisation d'un échangeur de chaleur, le refroidissement est, de préférence, effectué par échange de chaleur indirect contre au moins une partie du premier flux d'alimentation avant le premier dispositif de chauffage.

13. Appareil selon l'une quelconque des revendications précédentes, **caractérisé en ce que** la capacité de refroidissement du dispositif de refroidissement et/ou le rapport de quantité du premier flux partiel d'hydrogénation au deuxième flux partiel d'hydrogénation est choisi de sorte qu'à l'entrée dans la première zone d'hydrogénation, le mélange ait une température inférieure à 300 °C, de préférence inférieure à 250 °C, de manière préférée entre toutes inférieure à 230 °C.

14. Appareil selon l'une quelconque des revendications précédentes, **caractérisé en ce que** l'appareil comprend en outre une zone d'adsorption qui est remplie avec un adsorbant sélectif pour les métaux et qui est disposée en amont des un ou plusieurs moyens de combinaison et de mélange du deuxième flux d'alimentation avec au moins une partie du premier flux d'alimentation.

15. Appareil selon l'une quelconque des revendications précédentes, **caractérisé en ce que** le premier dispositif de chauffage est conçu comme un échangeur de chaleur et adapté pour conduire un échange de chaleur indirect entre le premier flux d'alimentation et un flux de produit de gaz de synthèse brut chaud provenant de l'installation de reformage à la vapeur, un flux de gaz de combustion chaud provenant du four de reformeur ou un flux de gaz de produit chaud provenant de l'installation de conversion de CO (déplacement de CO) en aval de l'installation de reformage à la vapeur.

16. Appareil selon l'une quelconque des revendications précédentes, **caractérisé en ce que** l'installation de reformage à la vapeur comprend un étage de préreformage (préreformeur) dans lequel les hydrocarbures supérieurs sont au moins partiellement convertis en méthane dans des conditions de préreformage.
